# EUROPEAN PATENT SPECIFICATION

(11) **EP 3 313 054 B1**
(45) Date of publication and mention of the grant of the patent: **16.10.2019**
(21) Application number: 16814644.7
(22) Date of filing: 21.06.2016
(51) Int. Cl.: H04M 1/02, H04M 1/23, G06F 1/16, G06F 3/0488, G06F 3/044, G06F 3/041

(54) **SYSTEM WITH AN ELECTRONIC DEVICE HAVING AUXILIARY DEVICE**
SYSTEM MIT EINEM ELEKTRONISCHEN GERÄT MIT ZUSATZGERÄT
SYSTEME AVEC UN DISPOSITIF ELECTRONIQUE AYANT UN DISPOSITIF AUXILIAIRE

(30) Priority: 22.06.2015 KR 20150088699
(43) Date of publication of application: 25.04.2018
(73) Proprietor: Samsung Electronics Co., Ltd., Suwon-si, Gyeonggi-do 16677 (KR)
(72) Inventor: KIM, Jiyong, Seoul 05527 (KR); LEE, Heonseok, Suwon-si Gyeonggi-do 16699 (KR); KIM, Hakyeol, Hwaseong-si Gyeonggi-do 18437 (KR); PARK, Jooyoung, Guri-si Gyeonggi-do 11941 (KR); KWON, Taehong, Yongin-si Gyeonggi-do 16943 (KR)
(74) Representative: HGF Limited
(86) International application number: PCT/KR2016/006550
(87) International publication number: WO 2016/208931

(56) References cited:
- WO-A2-2011/126678
- JP-A- H1 063 392
- KR-A- 20080 041 487
- KR-A- 20110 085 551
- KR-A- 20120 019 934
- KR-B1- 101 261 768
- US-A1- 2012 039 023

## Description

### Technical Field

Various embodiments of the present disclosure relate to an auxiliary device of an electronic device and a method for inputting characters using the same.

### Background Art

From among user input devices, a device that grasps an intention on presence/absence of a user's operation using a change in capacitance, and then drives an electronic device as user desires may be referred to as a "C-type touch" input device.

In the case of a keyboard which is used as a data input device connected to an electronic device, it is possible to input through an electric connection with the corresponding electronic device. The operation principle of the keyboard is to inform the electronic device of an input position on every key through an electric connection such as Bluetooth, a USB, etc., and a Bluetooth keyboard or a USB keyboard is an example of such an input device. WO 2011/126678 A2 discloses a keyboard overlay for a smart phone. The overlay is identifiable, can be moved to the rear side when not in use, and it has a dome geometry and a hole in a substrate in the key assembly.

### Detailed Description of the Invention

### Technical Objects

In the case of such a keyboard, there is no limitation in the design of the keyboard, but an electric circuit is required to enable the keyboard to be electrically connected with an electronic device, and power (battery or the like) enabling the circuit is required. Therefore, thickness and price of the keyboard increase.

In addition, a related-art wireless keyboard requires an electric circuit enabling electric communication such as Bluetooth, etc., an embedded integrated circuit (IC), and power (battery or the like) for driving these circuits, and thus cannot avoid increased thickness and price. A wire (connector type) keyboard has a limit to being applied to electronic devices due to its limited design such as a lower end protruding to connect to a 5-pin connector.

Various embodiments of the present disclosure provide an electronic device having an auxiliary input device, which can input to the electronic device employing a touch input method by a physical key pressing operation.

Various embodiments of the present disclosure provide an electronic device having an auxiliary input device which implements an electronic device keyboard using a C-type touch method, instead of using a related-art electric connection.

Various embodiments of the present disclosure provide an electronic device having an auxiliary input device, which is mounted on a front surface of the electronic device to enable easy data input, and is coupled to a rear surface of the electronic device to be carried (kept) with the electronic device when it is not in use.

Various embodiments of the present disclosure provide an electronic device having an auxiliary input device, which is coupled to an exterior cover and then is arranged on a front surface of the electronic device to enable easy data input, and is coupled to a rear surface of the exterior cover to be carried (kept) with the electronic device when it is not in use.

### Technical Solving Means

According to various exemplary embodiments of the present disclosure, there is provided a system including: a first electronic device having a touch screen arranged thereon; and a second electronic device which is arranged in close contact with at least a part of one surface of the touch screen, and is configured to input data to the touch screen by a pressing operation, wherein the second electronic device comprises: a keypad comprising an array of a plurality of key tops that are pressed; and a substrate configured to operate the touch screen in response to the key tops being pressed.

In addition, according to various exemplary embodiments of the present disclosure, there is provided an electronic device, including: an electronic device upper surface; a rear surface opposite to the upper surface; a touch screen arranged on the electronic device upper surface; an exterior cover arranged on the rear surface; and an auxiliary device which is attached to or detached from the exterior cover by means of a coupling structure, wherein the auxiliary device is coupled in close contact with at least a part of the touch screen, and is configured to operate the touch screen by a pressing operation.

In addition, according to various exemplary embodiments of the present disclosure, there is provided an electronic device, including: a display configured to display a first display area; and a controller configured to determine whether an auxiliary device is mounted, to determine a type of the auxiliary device when the auxiliary device is mounted, to enter an input mode corresponding to the type of the auxiliary device, and to receive a user input through the auxiliary device.

### Advantageous Effect

According to various embodiments of the present disclosure, in an electronic device having a touch screen such as a smart phone, a keyboard of a C-type touch method can be implemented.

In addition, according to various embodiments of the present disclosure, it is possible to input data to an electronic device employing a touch input by a physical key pressing operation.

In addition, according to various embodiments of the present disclosure, an auxiliary device can be coupled to a rear surface of an exterior of an electronic device, and thus the risk of loss can be prevented.

### Brief Description of the Drawings

FIG. 1 is a perspective view showing a front surface of an electronic device according to various embodiments;
FIG. 2 is a perspective view showing a rear surface of the electronic device according to various embodiments;
FIG. 3 is a view showing the front surface of the electronic device on which an exterior cover is mounted according to various embodiments of the present disclosure;
FIG. 4 is a view showing a side surface of the electronic device on which the exterior cover is mounted according to various embodiments of the present disclosure;
FIG. 5 is a view showing the front surface of the electronic device on which an auxiliary device is mounted according to various embodiments of the present disclosure;
FIG. 6 is a side view of FIG. 5;
FIG. 7 is a view showing a state in which the auxiliary device is mounted on the rear surface of the exterior cover of the electronic device according to various embodiments of the present disclosure;
FIG. 8 is a perspective view showing a state in which the auxiliary device is mounted on the rear surface of the exterior cover of the electronic device according to various embodiments of the present disclosure;
FIG. 9 is a cross sectional view showing a configuration of an auxiliary input device arranged on a touch screen of the electronic device according to various embodiments of the present disclosure;
FIG. 10 is a view showing an upper surface of a substrate of the auxiliary input device according to various embodiments of the present disclosure;
FIG. 11 is a view showing a rear surface of the substrate of the auxiliary input device according to various embodiments of the present disclosure;
FIGs. 12A and 12B are views showing receiving and transmitting patterns formed on the touch screen according to various embodiments of the present disclosure;
FIG. 13A is a view showing a shape of a pad which is designed on the rear surface of the substrate of the auxiliary input device with sensitivity of 2 nodes per 1 key according to another example;
FIG. 13B is a view showing an example in which each of the conductive pads formed on the rear surface of the substrate of the auxiliary input device is arranged over two intersections of transmitters (Tx) and receivers (Rx);
FIG. 14A is a view showing a shape of a pad which is designed on the rear surface of the substrate of the auxiliary input device with sensitivity of 1 node per 1 key according to various embodiments of the present disclosure;
FIG. 14B is a view showing an example in which each of the conductive pads formed on the rear surface of the substrate of the auxiliary input device is arranged at one intersection of a transmitter (Tx) and a receiver (Rx) according to various embodiments of the present disclosure;
FIG. 15 is a block diagram of an electronic device 201 according to various embodiments;
FIG. 16 is a flowchart for recognizing an auxiliary device in an electronic device according to various embodiments of the present disclosure;
FIG. 17 is a flowchart for entering a keyboard mode in the electronic device according to various embodiments of the present disclosure; and
FIG. 18 is a view showing a front surface of an electronic device according to various embodiments of the present disclosure.

### Best Mode for Embodying the Invention

Hereinafter, various embodiments of the present disclosure will be described with reference to the accompanying drawings. However, it should be understood that there is no intent to limit the present disclosure to the particular forms disclosed herein; rather, the present disclosure should be construed to cover various modifications, equivalents, and/or alternatives of embodiments of the present disclosure. In describing the drawings, similar reference numerals may be used to designate similar constituent elements.

Herein, the expressions "include", "may include" and other conjugates refer to the existence of a corresponding disclosed function, operation, or constituent element, and do not limit one or more additional functions, operations, or constituent elements. Further, "have", and their conjugates merely denote a certain feature, numeral, step, operation, element, component, or a combination thereof, and do not exclude the existence or possibility of addition of one or more other features, numerals, steps, operations, elements, components, or combinations thereof.

The expression "or" or "at least one of A or/and B" includes any or all of combinations of words listed together. For example, the expression "A or B" or "at least A or/and B" may include A, may include B, or may include both A and B.

In the present disclosure, expressions including ordinal numbers, such as "first" and "second," etc., may modify various elements. However, such elements are not limited by the above expressions. For example, the above expressions do not limit the sequence and/or importance of the elements. The above expressions are used merely for the purpose of distinguishing an element from the other elements. For example, a first user device and a second user device indicate different user devices although both of them are user devices. Accordingly, a first element may be referred to as a second element, and likewise a second element may also be referred to as a first element, without departing from the scope of embodiments of the present disclosure.

When an element is referred to as being "coupled" or "connected" to any other element, it should be understood that not only may the element be coupled or connected directly to the other element, but also a third element may be interposed therebetween. Contrarily, when an element is referred to as being "directly coupled" or "directly connected" to any other element, it should be understood that no other element is interposed between the two elements.

According to a situation, the expression "configured to (or set to)" used herein may be interchangeably used with, for example, the expression "suitable for," "having the capacity to," "designed to," "adapted to," "made to," or "capable of". The term "configured to (or set to)" must not mean only "specifically designed to" in hardware. Instead, the expression "a device configured to" may mean that the device is "capable of" operating together with another device or other components. For example, a "processor configured to (or set to) perform A, B, and C" may mean a dedicated processor (for example, an embedded processor) for performing a corresponding operation or a generic-purpose processor (for example, a central processing unit (CPU) or an application processor) which may perform corresponding operations by executing one or more software programs which are stored in a memory device.

The terms herein are used merely to describe one or more certain embodiments and are not intended to limit the present disclosure. As used herein, singular forms may include plural forms as well, unless the context explicitly indicates otherwise. Further, all terms used herein, including technical and scientific terms, have the same meaning as commonly understood by those of skill in the art to which the present disclosure pertains. Such terms as those defined in a generally used dictionary are to be interpreted to have the same meanings as the contextual meanings in the relevant field of art, and are not to be interpreted to have ideal or excessively formal meanings unless clearly defined in herein.

An electronic device according to the present disclosure may be a device including a communication function. For example, the electronic device may include at least one of a Smartphone, a tablet personal computer (PC), a mobile phone, a video phone, an electronic book (e-book) reader, a desktop PC, a laptop PC, a netbook computer, a personal digital assistant (PDA), a portable multimedia player (PMP), an MP3 player, a mobile medical appliance, a camera, and a wearable device (e.g. a head-mounted-device, such as electronic glasses, electronic clothes, an electronic bracelet, an electronic necklace, an electronic appcessory, electronic tattoos, or a smartwatch).

The electronic device may also be a smart home appliance with a communication function such as a television, a digital versatile disk (DVD) player, an audio, a refrigerator, an air conditioner, a vacuum cleaner, an oven, a microwave oven, a washing machine, an air cleaner, a set-top box, a TV box (e.g., Samsung HomeSyncTM, Apple TVTM, or Google TVTM), a game console, an electronic dictionary, an electronic key, a camcorder, and an electronic photo frame.

The electronic device may also include at least one of various medical appliances (e.g., magnetic resonance angiography (MRA), magnetic resonance imaging (MRI), computed tomography (CT), and ultrasonic machines), navigation equipment, a global positioning system (GPS) receiver, an event data recorder (EDR), a flight data recorder (FDR), automotive infotainment device, electronic equipment for ships (e.g., ship navigation equipment and a gyrocompass), avionics, security equipment, a vehicle head unit, an industrial or home robot, an automatic teller machine (ATM), and a point of sale (POS) device.

The electronic device may also include at least one of a part of furniture or a building/structure, an electronic board, an electronic signature receiving device, a projector, and various kinds of measuring instruments (e.g., a water meter, an electric meter, a gas meter, and a radio wave meter). Further, the electronic device may be a flexible device. The electronic device may also be a combination of one or more of the aforementioned various devices. Further, it will be apparent to those skilled in the art that the electronic device, according to the present disclosure, is not limited to the aforementioned devices.

Herein, the term "user" in may indicate a person who uses an electronic device or a device (e.g., an artificial intelligence electronic device) that uses an electronic device.

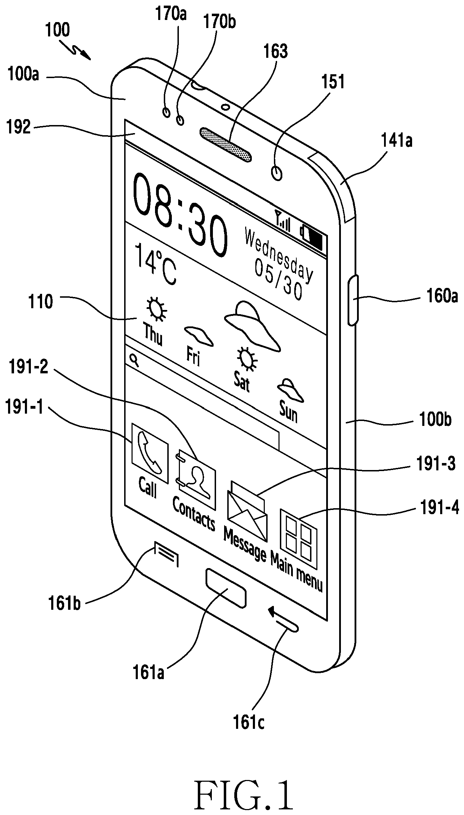

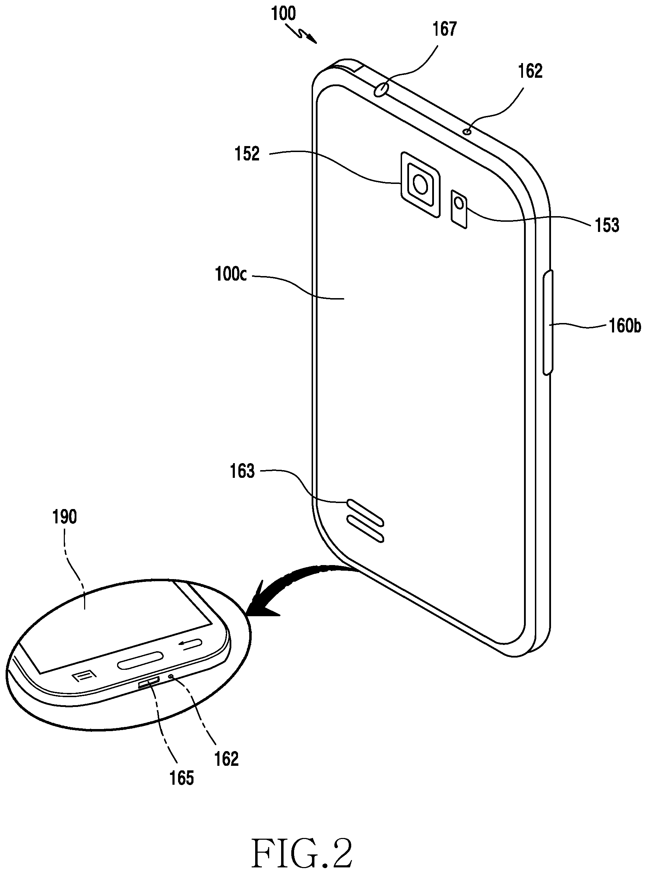

FIG. 1 is a perspective view showing a front surface of an electronic device according to various embodiments. FIG. 2 is a perspective view showing a rear surface of the electronic device according to various embodiments.

Referring to FIGs. 1 and 2, a touch screen 190 may be disposed on a center of the front surface 100a of the electronic device 100. The touch screen 190 may be formed to be large enough to occupy most of the front surface 100a of the electronic device 100. FIG. 1 depicts that a main home screen is displayed on the touch screen 190. The main home screen may be the first screen that is displayed on the touch screen 190 when power of the electronic device 100 is turned on. In addition, when the electronic device 100 has different home screens of numerous pages, the main home screen may be the first one of the home screens of numerous pages. Shortcut icons 191-1, 191-2, 191-3 for executing frequently used applications, a main menu toggle key 191-4, time, weather, or the like may be displayed on the home screen. The main menu toggle key 191-4 displays a menu screen on the touch screen 190. In addition, a status bar 192 displaying a state of the electronic device 100, such as a battery charging status, an intensity of a received signal, and a current time, may be formed on an upper end of the touch screen 190. A home button 161a, a menu button 161b, and a back button 161c may be formed on a lower portion of the touch screen 190.

The home button 161a displays the main home screen on the touch screen 190. For example, when the home key 161a is touched in a state in which a home screen different from the main home screen or a menu screen is displayed on the touch screen 190, the main home screen may be displayed on the touch screen 190. In addition, when the home button 191a is touched while applications are being executed on the touch screen 190, the main home screen shown in FIG. 1 may be displayed on the touch screen 190. In addition, the home button 161a may be used to display the recently used applications or display a task manager on the touch screen 190.

The menu button 161b provides a link menu that can be used on the touch screen 190. The link menu may include a widget add menu, a background screen change menu, a search menu, an edit menu, an environment setting menu, or the like. The back button 161c may display a screen that was executed right before a currently executed screen or may terminate the most recently used application.

A first camera 151, an illuminance sensor 170a, and a proximity sensor 170b may be arranged on a border of the front surface 100a of the electronic device 100. A second camera 152, a flash 153, and a speaker 163 may be arranged on the rear surface 100c of the electronic device 100.

A power/reset button 160a, a volume button 161b, a ground wave digital multimedia broadcasting (DMB) antenna 141a for receiving a broadcast, one or more microphones 162 may be arranged on a side surface 100b of the electronic device 100. The DMB antenna 141a may be fixed to the electronic device 100 or may be formed to be attachable to/detachable from the electronic device 100.

In addition, a connector 165 may be formed on a side surface of a lower end of the electronic device 100. The connector 165 has a plurality of electrodes formed therein and may be connected with an external device through a wire. An earphone connection jack 167 may be disposed on a side surface of the upper end of the electronic device 100. An earphone may be inserted into the earphone connection jack 167. The earphone connection jack 167 may be disposed on the side surface of the lower end of the electronic device 100.

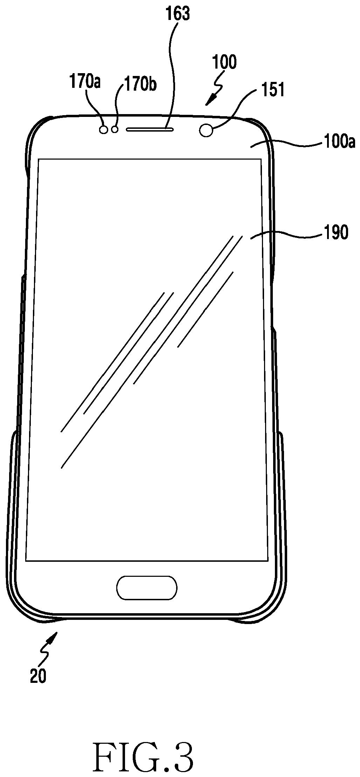

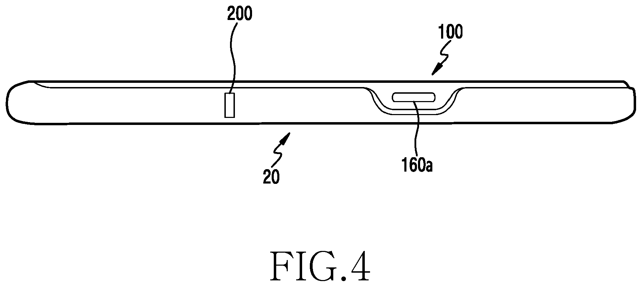

FIG. 3 is a view showing the front surface of the electronic device on which an exterior cover is mounted according to various embodiments of the present disclosure. FIG. 4 is a view showing the side surface of the electronic device according to various embodiments of the present disclosure.

Referring to FIGs. 3 and 4, the electronic device 100 according to various embodiments may be provided with an exterior cover 20 to be protected from a shock such as dropping or to use it as an accessory to show user's individuality. The exterior cover 20 may be coupled to or decoupled from the electronic device 100. When the exterior cover 20 is coupled to cover the rear surface of the electronic device 100, the exterior cover 20 may be referred to as a back cover or a rear cover. The exterior cover 20 may be formed of a synthetic resin which can be implemented in various colors, a metallic material, or a combination thereof.

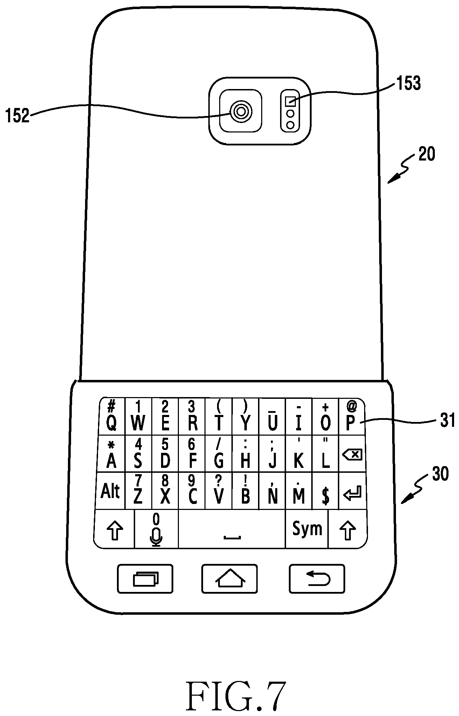

The exterior cover 20 may be configured in a such a shape that it covers the rear surface and at least a part of the side surface of the electronic device 100, and may be carried with the electronic device 100. The exterior cover 20 may be formed in such a shape that it opens at least one side key 160a disposed on the side surface of the electronic device 200, opens the rear camera 152 (see FIG. 7) disposed on the rear surface, and closes the other region.

According to various embodiments, when the exterior cover 20 is coupled to the electronic device 100, the touch screen (display) 190, the plurality of sensors 170a, 170b, a receiver 163, and the front camera 151, which are arranged on the front surface 100a, may be opened, the plurality of side keys 160a, a universal serial bus (USB) connector 165, etc., which are arranged on the side surface, may be opened, and the camera 152 and the flash 153 which are arranged on the rear surface may be opened.

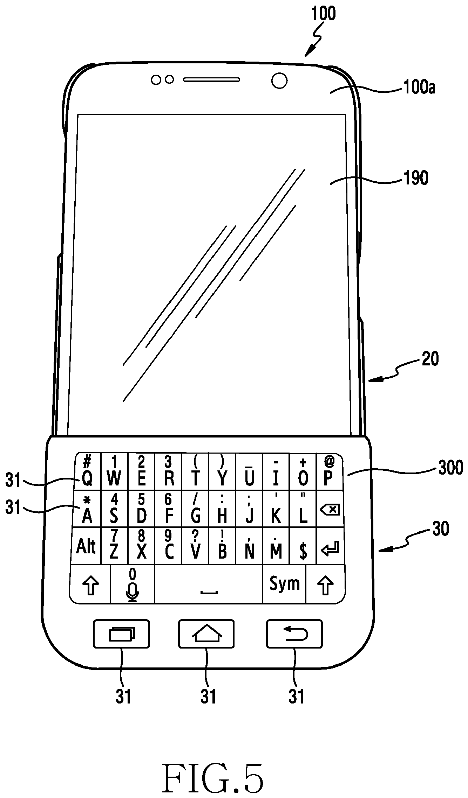

Referring to FIG. 4, a coupling structure for attaching/detaching an auxiliary input device, which will be described below, to/from the exterior cover 20 may be formed. The coupling structure may include coupling of a recess and a protrusion which is well known in the related art. A recess may be formed on the exterior cover 20 and a protrusion (not shown) may be formed on the auxiliary input device 30 (see FIG. 5), and the auxiliary input device 30 may be coupled to the exterior cover 20 by coupling the recess and the protrusion. In addition, the auxiliary input device 30 may be decoupled from the electronic device 100. Reference numeral 200 may indicate a mounting recess.

Hereinafter, the electronic device to or from which another electronic device according to various embodiments of the present disclosure, for example, an auxiliary device, is attached or detached will be described with reference to FIGs. 5 to 8.

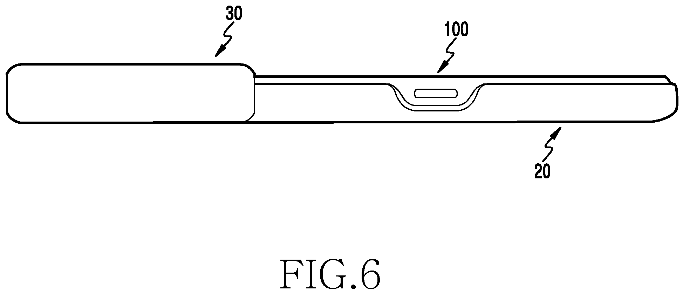

FIG. 5 is a view showing the front surface of the electronic device on which the auxiliary device is mounted according to various embodiments of the present disclosure. FIG. 6 is a side view of FIG. 5.

Referring to FIGs. 5 and 6, the electronic device 30 according to various embodiments of the present disclosure is a device that serves as an accessory for another electronic device 100, and in particular, may be a data input device. In particular, the electronic device 30 according to various embodiments may be an auxiliary input device which is coupled to another electronic device 100 to be used to input data. In addition, the auxiliary input device may be provided with a keyboard layout and thus it may be referred to as a keyboard. In the following description, the electronic device 30 according to various embodiments of the present disclosure will be referred to as an auxiliary input device. The auxiliary input device 30 according to various embodiments may be coupled to the electronic device 100 and may be used as a data input device for the electronic device 100.

The auxiliary input device 30 according to various embodiments may be coupled to the exterior cover 20 and may be disposed on a lower portion of the front surface 100a of the electronic device. In particular, the auxiliary input device 30 may be disposed in close contact with the touch screen 190, such that a user can input desired data to the electronic device 100 by a key pressing operation by using the auxiliary input device. When the auxiliary input device 30 is not provided, the user may input desired input by a touch operation on the touch screen 190, and, when the auxiliary input device 30 is used, the user may input desired data to the electronic device 100 by a pressing operation. To achieve this, the auxiliary input device 30 may input data by a pressing operation, but the pressing operation may be recognized as being the same as the touch operation on the touch screen of the electronic device, and a data input operation may be performed.

The auxiliary input device 30 according to various embodiments may have a data input unit disposed on a front surface 300 thereof, and may have key tops 31 of the data input unit arranged to be exposed to the outside. The layout of the key tops 31 may be a QWERTY keyboard layout. In addition, the key tops 31 may include key tops of a home key, a menu key, and a back key. The auxiliary input device 30 may be coupled to or decoupled from the exterior cover 20 by means of an injection molding structure.

Although not shown in the drawings, a similar key layout may be displayed on the touch screen 190 of the electronic device on which the auxiliary input device 30 is disposed.

The auxiliary input device 30 may be coupled to or decoupled from the exterior cover 20 of the electronic device 100 in a sliding guide method. The auxiliary input device 30 may be coupled and then may be fixed to the electronic device 100. This may be achieved by various methods from among well-known coupling structures, and for example, a coupling force may be provided by coupling of a protrusion and a recess. In addition, the well-known coupling structures may include coupling between magnets having different polarities or coupling between a magnet and a metal substance.

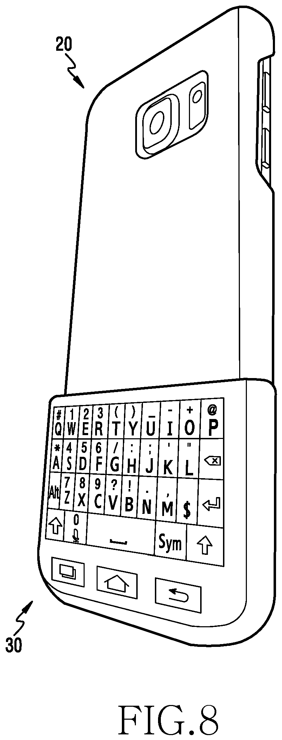

FIG. 7 is a view showing a state in which the auxiliary device is mounted on the rear surface of the exterior cover of the electronic device according to various embodiments of the present disclosure. FIG. 8 is a perspective view showing the state in which the auxiliary device is mounted on the rear surface of the exterior cover of the electronic device according to various embodiments of the present disclosure.

Referring to FIGs. 7 and 8, the auxiliary input device 30 may not be carried with the electronic device 100 when it is not in use, but may be coupled to the rear surface of the electronic device 100. When the auxiliary input device 30 is not kept since it is not in use, there is the risk of loss. Therefore, it is recommended that the auxiliary input device 30 is carried with the exterior cover 20. The auxiliary input device 30 may be detached from the front surface of the electronic device 100, and then, the electronic device 100 may be turned over and the auxiliary input device 30 may be coupled to the exterior cover 20 to be disposed on the rear surface. Additionally, the auxiliary input device 30 may be provided in the form of a cover to cover a part of the screen or may be provided in various changed forms.

Hereinafter, the configuration of the auxiliary device according to various embodiments of the present disclosure will be described with reference to the accompanying drawings.

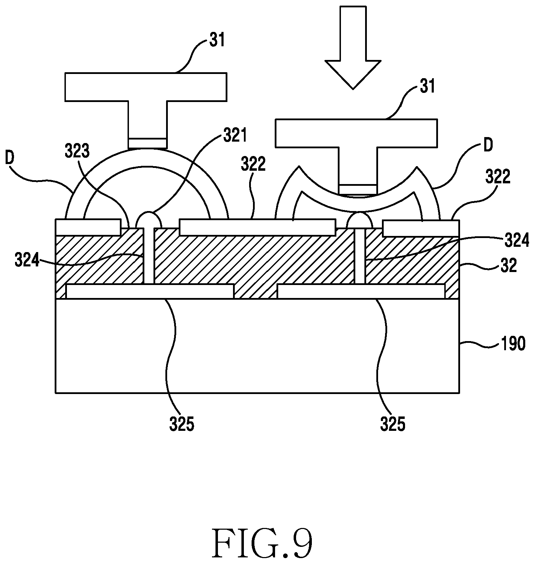

FIG. 8 is a perspective view showing the state in which the auxiliary device is mounted on the rear surface of the exterior cover of the electronic device according to various embodiments of the present disclosure. FIG. 9 is a cross sectional view showing the configuration of the auxiliary input device disposed on the touch screen of the electronic device according to various embodiments of the present disclosure.

Referring to FIGs. 8 and 9, the auxiliary input device 30 according to various embodiments may be an auxiliary input electronic device for inputting data, and may be an auxiliary device of a main electronic device. The auxiliary input device 30 according to various embodiments may include a keypad and a substrate 32. The auxiliary input device 30 may operate the touch screen 190 by a pressing operation of the keypad. The keypad may include a plurality of key tops 31. The key tops 31 may be arranged in plural number, and may be a QWERTY keyboard layout. In addition, the key tops 31 may include a home key, a menu key, and a back key which are physical keys corresponding to the home key, the menu key, and the back key arranged on the lower end of the electronic device.

Each of the key tops 31 may be arranged to be pressed by the user. The respective key tops 31 may be arranged, thereby forming one keypad.

Referring to FIG. 9, the auxiliary input device according to various embodiments may operate a touch sensor disposed in the touch screen 190 in response to a pressing operation on the key top 31 of the keypad. In addition, the touch screen 190 may include a display panel, a touch sensitive panel, and a window which are well known in the related art.

In this case, the substrate 32 disposed between the touch screen 190 and the key tops 31 may connect them. The keypad may include the plurality of key tops 31 and dome switches arranged under the key tops 31 to be interlocked therewith. Each of the dome switch may include a dome D and a contact point which is brought into contact with the dome D when the dome D is pressed. The contact point may be implemented by conductive areas 321, 322 of the substrate 32 isolated from each other, and the pressed dome D. In other words, the dome D may be a connector electrically connecting the isolated conductive areas 321, 322. In FIG. 9, the left view illustrates that the key top 31 is not pressed, and the right view illustrates that the key top 31 is pressed and thus a contact point is generated between the isolated conductive areas 321, 322 by the dome D. The contact point may be one or more contact points.

In addition, the substrate 32 may include a first surface and a second surface opposite to the first surface. The first surface may be a surface facing the dome D, and the second surface may be a surface facing the touch screen 190. In addition, the first surface may be an upper surface and the second surface may be a rear surface.

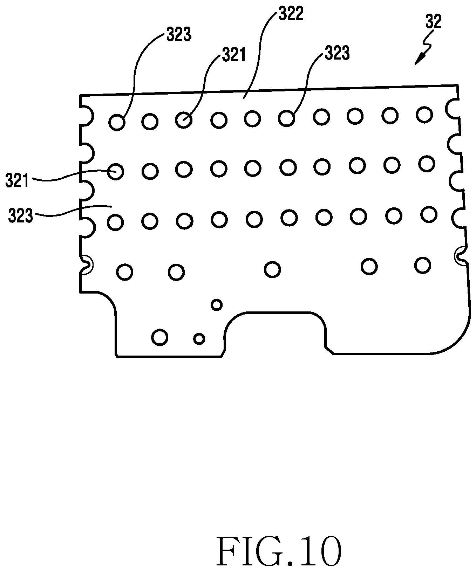

Referring to FIGs. 9 and 10, the upper surface of the substrate 32 may be divided into conductive layer areas 321, 322 and non-conductive layer areas 323. The non-conductive layer area 323 may be an independent area which is isolated from the conductive layer areas 321, 322. The non-conductive layer area 323 is an area on the upper surface of the substrate 32 where no conductive layer is formed, and may be arranged around the key top 31 in a ring shape. One ring-type non-conductive layer area may be arranged around one key top 31.

The conductive layer areas 321, 322 may be separated from each other by the non-conductive layer area 323. The conductive layer areas may include the first conductive layer area 321 formed inside the non-conductive layer area 323, and the second conductive layer area 322 formed outside the non-conductive layer area 323. When the key top 31 is pressed, the dome D may be pressed and the first and second conductive layer areas 321, 322 may be electrically connected with each other by the dome D. The dome D may be a well-known metal dome.

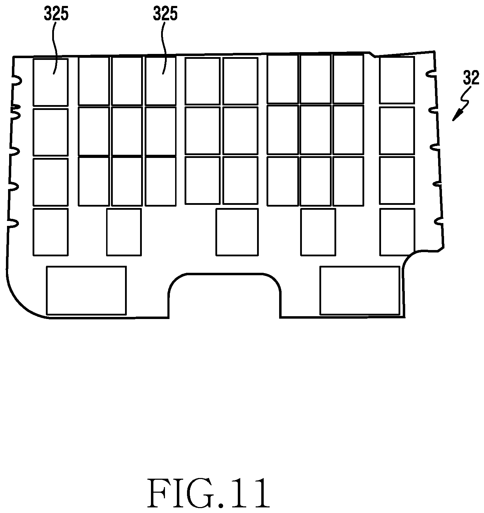

Referring to FIGs. 9 and 11, the substrate 32 may include a bottom surface. Conductive pads 325 may be formed on portions of the bottom surface facing the first conductive layer areas 321. Each of the conductive pads 325 may be electrically connected with the contact point formed on the upper surface of the substrate 32. To achieve this, the substrate 31 may include a connector 324 connecting the contact point and the conductive pad 325. The connector 324 may be formed by forming a via hole in the substrate 32 and plating or filling the via hole with a conductive material.

When one key top 31 is pressed, the dome D may connect the first and second conductive layer areas 321, 322, and this contact state may be transmitted to the conductive pad 325 by means of the connector 324. This connection state may provide one path.

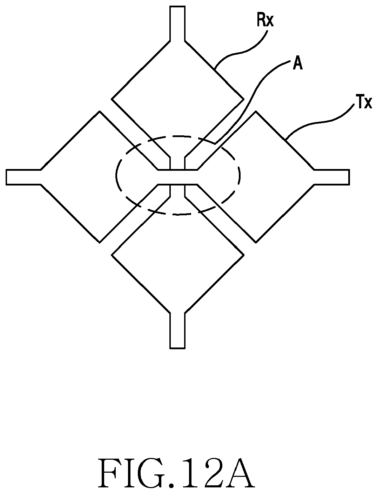

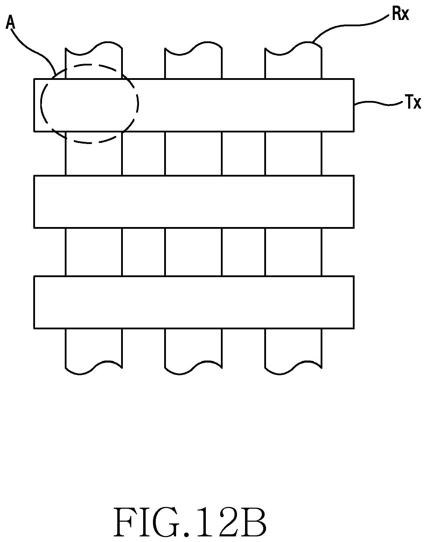

FIGs. 12A and 12B are views showing a receiving pattern and a transmitting pattern formed on the touch screen according to various embodiments of the present disclosure.

Referring to FIGs. 12A and 12B, each of the conductive pads 325 (FIG. 1) may be formed on a place corresponding to an intersection A of a transmitter Tx and a receiver Rx, as a result of analyzing an indium tin oxide (ITO) pattern provided in the touch screen (display). The key top of the keypad may be arranged at the intersection A of the Tx and the Rx, and in addition, the first conductive layer area may be arranged, such that sensitivity can be increased.

Referring back to FIG. 9, the auxiliary input device according to various embodiments will be described.

The touch screen (touch sensor) in the electronic device may recognize a change in capacitance as an input. When the change in capacitance is less than or equal to a predetermined value, it is difficult to recognize a touch. Therefore, as the change in the capacitance is greater, it is more advantageous to perform touch input. Accordingly, as a method for increasing the change in capacitance, the device according to various embodiments of the present disclosure may be configured.

When the key top 31 is pressed, the first and second conductive layer areas 321, 322 and the connector 234 are electrically connected with each other, thereby forming one path for transferring electric charge. In this case, the first and second conductive layer areas 321, 322 of the substrate should have a high capacity enough to deal with a change in electric charge. When the key top is pressed, electric charge flowing along an electric field formed by the Tx and the Rx in the touch screen moves through the path, such that a change in capacitance is caused. According to this principle, a physical key pressing operation may be converted into an input operation such as a touch operation on the touch screen.

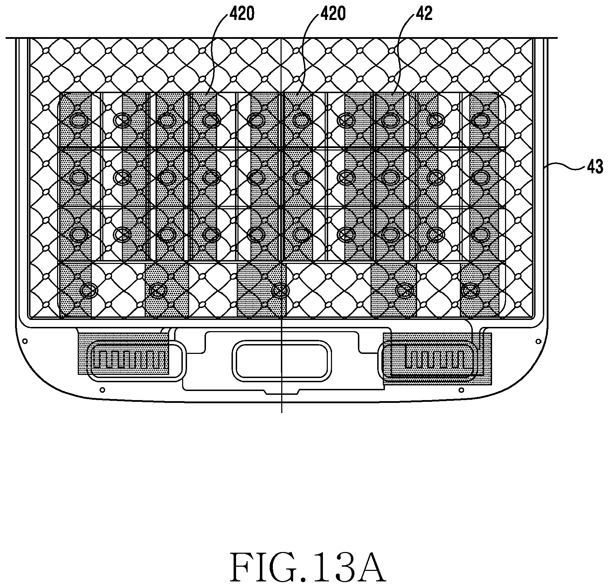

FIG. 13A is a view showing a shape of a pad which is designed on a rear surface of a substrate of an auxiliary input device with sensitivity of 2 nodes per 1 key according to an example.

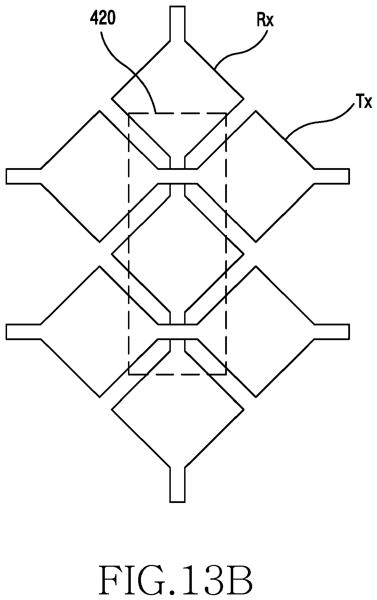

Referring to FIG. 13, in the auxiliary input device, a conductive pad 420 formed on a substrate 42 and corresponding to one key top may be designed to include two nodes formed in a touch screen 43. In other words, two intersections of transmitters Tx and receivers Rx may be arranged on one conductive pad 420.

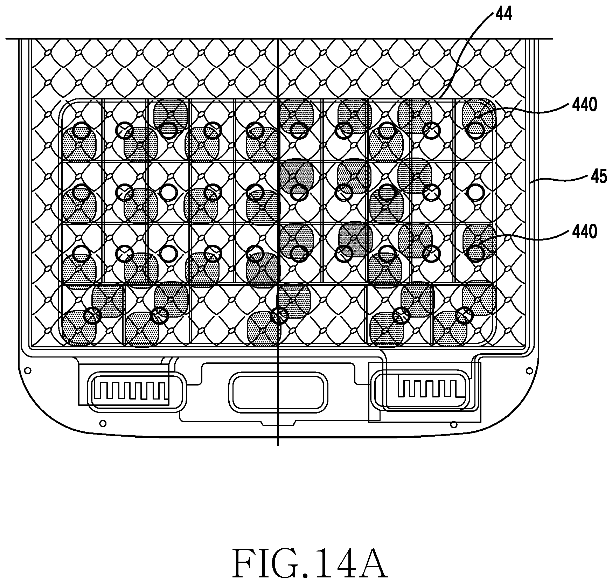

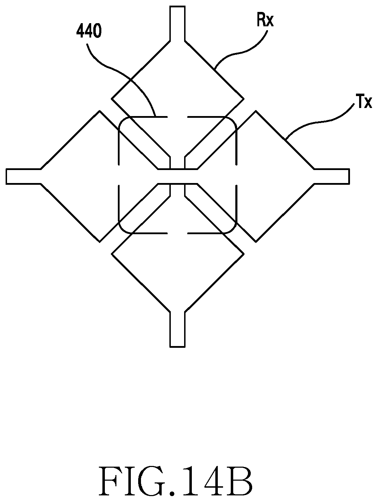

FIG. 14 is a view showing a shape of a pad which is designed on a rear surface of a substrate of an auxiliary input device with sensitivity of one node per one key according to various embodiments of the present disclosure.

Referring to FIG. 14, in the auxiliary input device according to various embodiments, a conductive pad 440 formed on a substrate 44 and corresponding to one key top may be designed to include one node formed in a touch screen 45. In other words, one intersection of a transmitter Tx and a receiver Rx may be arranged on one conductive pad 440.

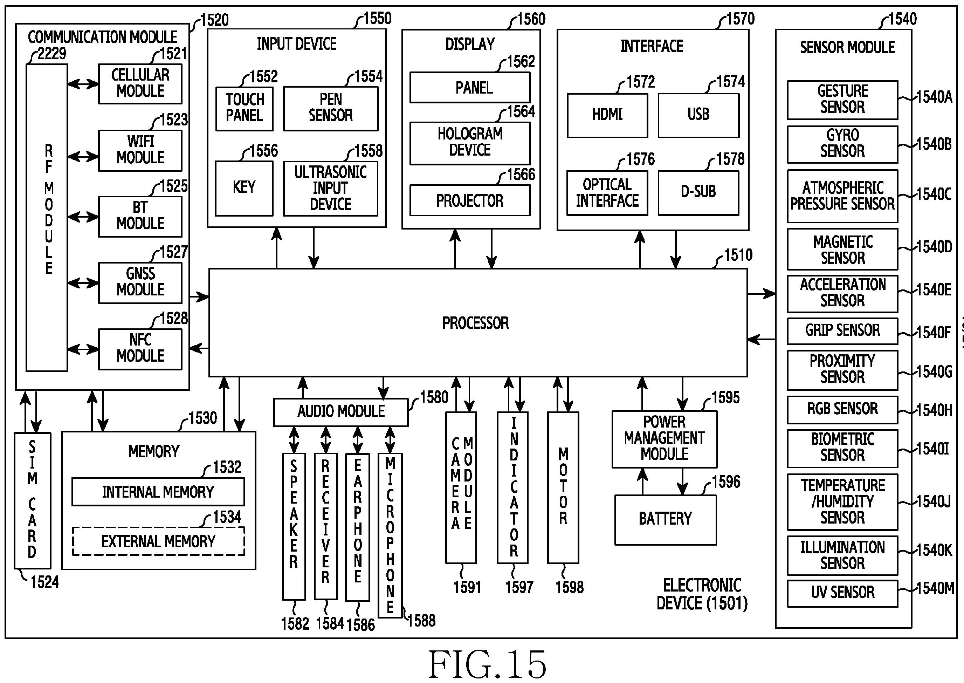

FIG. 15 is a block diagram of an electronic device 1501 according to various embodiments.

The electronic device 1501 may include one or more processors (e.g., an application processor (AP)) 1510, a communication module 1520, a subscriber identification module 1524, a memory 1530, a sensor module 1540, an input device 1550, a display 1560, an interface 1570, an audio module 1580, a camera module 1591, a power management module 1595, a battery 1596, an indicator 1597, and a motor 1598.

The processor 1510 may, for example, operate an operating system or an application program, to control a majority of hardware or software constituent elements connected to the processor 1510, and may perform various data processing and operations. The processor 1510 may be, for example, implemented as a system on chip (SoC). According to an exemplary embodiment, the processor 1510 may further include a graphic processing unit (GPU) and/or an image signal processor (ISP). The processor 1510 may include at least some (e.g., cellular module 1521) of the constituent elements shown in FIG. 15 as well. The processor 1510 may load a command or data received from at least one of the other constituent elements (e.g., non-volatile memory) to a volatile memory and process the loaded command or data, and may store the result data in the non-volatile memory.

The communication module 1520 may, for example, include a cellular module 1521, a WiFi module 1523, a Bluetooth module 1525, a GNSS module 1527, an NFC module 1528, and an RF module 1529. For example, the communication module 1520 may further include a WiGig module (not shown). According to one embodiment, the WiFi module 1523 and the WiGig module (not shown) may be integrated into one chip.

The cellular module 1521 may, for example, provide voice telephony, video telephony, a text service, an Internet service or the like through a telecommunication network. According to an exemplary embodiment, the cellular module 1521 may perform the distinction and authentication of the electronic device 1501 within the telecommunication network by using the subscriber identification module (e.g., SIM card) 1524. According to an exemplary embodiment, the cellular module 1521 may perform at least some functions among functions the processor 1510 may provide. According to an exemplary embodiment, the cellular module 1521 may include a communication processor (CP).

According to some exemplary embodiment, at least some (e.g., two or more) of the cellular module 1521, the WiFi module 1523, the Bluetooth module 1525, the GNSS module 1527 or the NFC module 1528 may be included within one integrated chip (IC) or IC package.

The RF module 1529 may, for example, transmit and/or receive a communication signal (e.g., an RF signal). The RF module 1529 may, for example, include a transceiver, a power amplifier module (PAM), a frequency filter, a low noise amplifier (LNA), an antenna or the like. According to another exemplary embodiment, at least one of the cellular module 1521, the WiFi module 1523, the Bluetooth module 1525, the GNSS module 1527 or the NFC module 1528 may transmit and/or receive an RF signal through a separate RF module.

The subscriber identification module 1524 may, for example, include a card including a subscriber identification module and/or an embedded SIM. And, the subscriber identification module 1524 may include unique identification information (e.g., integrated circuit card identifier (ICCID)) or subscriber information (e.g., international mobile subscriber identity (IMSI)).

The memory 1530 may, for example, include an internal memory 1532 or an external memory 1534. The internal memory 1532 may, for example, include at least one of a volatile memory (e.g., a dynamic random access memory (DRAM), a static RAM (SRAM), a synchronous dynamic RAM (SDRAM) or the like), and/or a non-volatile memory (e.g., one time programmable read only memory (OTPROM), a programmable ROM (PROM), an erasable PROM (EPROM), an electrically EPROM (EEPROM), a mask ROM, a flash ROM, a flash memory, a hard drive, or a solid state drive (SSD)).

The external memory 1534 may include a flash drive, for example, a compact flash (CF), a secure digital (SD), a micro-SD, a mini-SD, an extreme digital (xD), a multi media card (MMC), a memory stick or the like. The external memory 1534 may be operatively or physically coupled with the electronic device 1501 through various interfaces.

The sensor module 1540 may, for example, measure a physical quantity or sense an activation state of the electronic device 1501, to convert measured or sensed information into an electrical signal. The sensor module 1540 may, for example, include at least one of a gesture sensor 1540A, a gyro sensor 1540B, a barometer 1540C, a magnetic sensor 1540D, an acceleration sensor 1540E, a grip sensor 1540F, a proximity sensor 1540G, a color sensor 1540H (e.g., a red, green, blue (RGB) sensor), a medical sensor 15401, a temperature-humidity sensor 1540J, an illumination sensor 1540K, or an ultra violet (UV) sensor 1540M. Additionally or alternatively, the sensor module 1540 may, for example, include an e-nose sensor, an electromyography (EMG) sensor, an electroencephalogram (EEG) sensor, an electrocardiogram (ECG) sensor, an infrared (IR) sensor, an iris scan sensor, and/or a finger scan sensor. The sensor module 1540 may further include a control circuitry for controlling at least one or more sensors belonging therein. In some exemplary embodiment, the electronic device 1501 may further include a processor configured to control the sensor module 1540 as a part of the processor 1510 or separately, to control the sensor module 1540 while the processor 1510 is in a sleep state.

The input device 1550 may, for example, include a touch panel 1552, a (digital) pen sensor 1554, a key 1556, or an ultrasonic input device 1558. The touch panel 1552 may, for example, use at least one scheme among a capacitive overlay scheme, a pressure sensitive scheme, an infrared beam scheme, or an ultrasonic scheme. Also, the touch panel 1552 may further include a control circuitry as well. The touch panel 1552 may further include a tactile layer, to provide a tactile response (i.e., a touch coordinate) to a user.

The (digital) pen sensor 1554 may, for example, be a part of the touch panel 1552, or include a separate sheet for recognition. The key 1556 may, for example, include a physical button, an optical key, or a keypad. The ultrasonic input device 1558 may detect an ultrasonic wave generated in an input tool through a microphone (e.g., a microphone 1588), to identify data corresponding to the detected ultrasonic wave. According to various embodiments, the input device 1550 can include a digital pen. According to various embodiments, the input device 1550 can receive a force touch.

The display 1560 may include a panel 1562, a hologram device 1564, a projector 1566, and/or a control circuitry for controlling them. The panel 1562 may, for example, be implemented to be flexible, transparent, or wearable. The panel 1562 may be configured as one or more modules along with the touch panel 1552. The hologram device 1564 may display a stereoscopic image in a space using a light interference phenomenon. The projector 1566 may project light onto a screen so as to display an image. For example, the screen may be disposed inside or outside the electronic device 1501. According to one embodiment, the display 1560 may further include a control circuit for controlling the panel 1562, the hologram device 1564, or the projector 1566.

The interface 1570 may, for example, include an HDMI 1572, a USB 1574, an optical interface 1576, or a D-subminiature (D-sub) 1578. The interface 1570 may, for example, include a mobile high-definition link (MHL) interface, an SD card / multi-media card (MMC) interface, or an infrared data association (IrDA) standard interface.

The audio module 1580 may, for example, convert a sound and an electrical signal interactively. The audio module 1580 may, for example, process sound information that is inputted or outputted through a speaker 1582, a receiver 1584, an earphone 1586, the microphone 1588 or the like.

The camera module 1591 may be, for example, a device able to capture a still image and a video. According to an exemplary embodiment, the camera module 1591 may include one or more image sensors (e.g., a front sensor or rear sensor), a lens, an image signal processor (ISP), or a flash (e.g., an LED, a xenon lamp or the like).

The power management module 1595 may, for example, manage power of the electronic device 1501. According to an exemplary embodiment, the power management module 1595 may include a power management integrated circuit (PMIC), a charger IC, or a battery or fuel gauge. The PMIC may employ a wired and/or wireless charging scheme. The wireless charging scheme may, for example, include a magnetic resonance scheme, a magnetic induction scheme, an electromagnetic wave scheme or the like. And, the wireless charging scheme may further include a supplementary circuitry for wireless charging, for example, a coil loop, a resonance circuitry, a rectifier or the like. The battery gauge may, for example, measure a level of the battery 1596, a voltage in charge, an electric current or a temperature. The battery 1596 may, for example, include a rechargeable battery and/or a solar battery.

The indicator 1597 may display a specific state (for example, a booting state, a message state, a charging state or the like) of the electronic device 1501 or a part (e.g., the processor 1510) of the electronic device 1501. The motor 1598 may convert an electrical signal into a mechanical vibration, and may generate a vibration, a haptic effect or the like. The electronic device 1501 may, for example, include a mobile TV support device (e.g., a GPU) capable of processing media data according to the standards of digital multimedia broadcasting (DMB), digital video broadcasting (DVB), mediaFloTM or the like.

The constituent elements described in the present document may each consist of one or more components, and a name of the corresponding constituent element may vary according to the kind of the electronic device. In various exemplary embodiments, the electronic device (e.g., the electronic device 1501) may omit some constituent elements, or further include additional constituent elements, or combine some of the constituent elements and configure the same as one entity to identically perform functions of the corresponding constituent elements before combination.

The processor 1510 may determine whether an auxiliary device is mounted on the electronic device. For example, the processor 1510 may determine whether an auxiliary device is mounted using a hall integrated circuit (IC) of the electronic device and a magnet of the auxiliary device.

As a result, when it is not determined that the auxiliary device is mounted, the processor 1510 may repeatedly determine whether an auxiliary device is mounted. On the other hand, when it is determined that the auxiliary device is mounted, the processor 1510 may determine a type of the auxiliary device mounted on the electronic device. For example, the processor 1510 may receive information on the type of the auxiliary device from an NFC tag of the auxiliary device using an NFC module. In addition, the processor 1510 may determine the type of the auxiliary device by analyzing the information on the type of the auxiliary device.

In addition, the processor 1510 may determine whether the determined type of the auxiliary device is a keyboard or not. As a result of determining, when the type of the auxiliary device is not a keyboard, the processor 1510 may perform a corresponding function according to the determined type of the auxiliary device. On the other hand, when the type of the auxiliary device is a keyboard, the processor 1510 may enter a keyboard mode. For example, the processor 1510 may automatically enter the keyboard mode. For example, the keyboard mode may be a mode in which a keyboard is displayed on the touch screen.

More specifically, the processor 1510 may divide a first display area into a second display area and a keyboard area. For example, the first display area may be a full area of the touch screen (display) before the auxiliary device is mounted. In addition, the processor 1510 may reduce the first display area and display it on the second display area. For example, the processor 1510 may display the second display area by reducing the first display area by adjusting a ratio of the first display area on the Y-axis (vertical axis) while maintaining a ratio on the X-axis (horizontal axis). In addition, the processor 1510 may display a keyboard on the keyboard area. For example, the keyboard may be any one of a QWERTY keyboard, a Chunjiin keyboard, a Naratgeul keyboard, a Vega keyboard, a MoAKey keyboard, a swype keyboard. In addition, the processor 110 may receive an input of a character from a user through the auxiliary device.

Although it is illustrated that, when the processor 1510 enters the keyboard mode, the processor 1510 may reduce the first display area and display it on the second display area, the present disclosure is not limited thereto and other embodiments are possible. For example, the processor 1510 may display a character display window on the second display area to display a character inputted through the keyboard. In another example, the processor 1510 may display an area of the first display area other than the keyboard area on the second display area as it is.

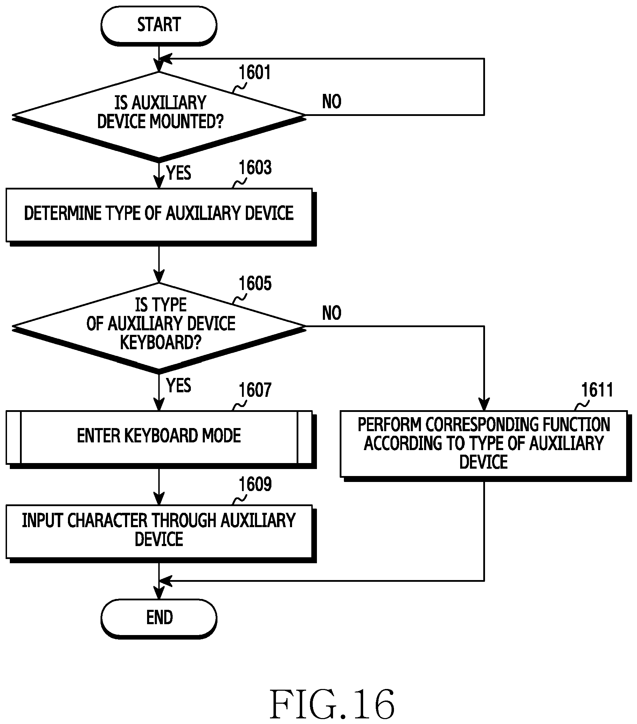

FIG. 16 is a flowchart for recognizing an auxiliary device in an electronic device according to various exemplary embodiments of the present disclosure.

Referring to FIG. 16, in operation 1601, the electronic device may determine whether an auxiliary device is mounted on the electronic device. For example, the electronic device may determine whether an auxiliary device is mounted using a hall IC (magnet sensor) of the electronic device and a magnet of the auxiliary device.

As a result, when it is determined that the auxiliary device is mounted, the electronic device may proceed to operation 1603, and, when it is not mounted, may repeat operation 1601.

In operation 1603, the electronic device may determine a type of the auxiliary device mounted thereon. For example, the electronic device may receive information on the type of the auxiliary device from an NFC tag of the auxiliary device using an NFC module. In addition, the electronic device may determine the type of the auxiliary device by analyzing the information on the type of the auxiliary device.

In operation 1605, the electronic device may determine whether the determined type of the auxiliary device is a keyboard or not. As a result of determining, when the auxiliary device is a keyboard, the electronic device may proceed to operation 1607, and, when it is not a keyboard, may proceed to operation 1611.

In operation 1611, the electronic device may perform a corresponding function according to the determined type of the auxiliary device.

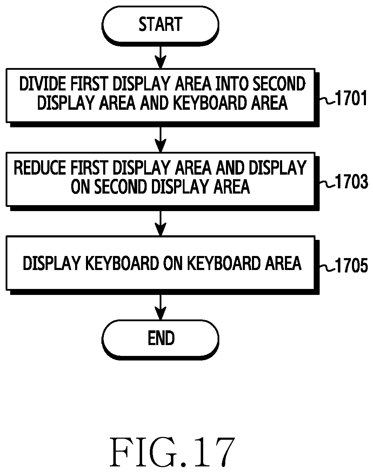

In operation 1607, the electronic device may enter a keyboard mode. For example, the electronic device may automatically enter the keyboard mode. For example, the keyboard mode may be a mode in which a keyboard is displayed on the touch screen. Hereinafter, operation 1607 will be described in detail with reference to FIG. 17.

In operation 1609, the electronic device may receive an input of characters through the auxiliary device.

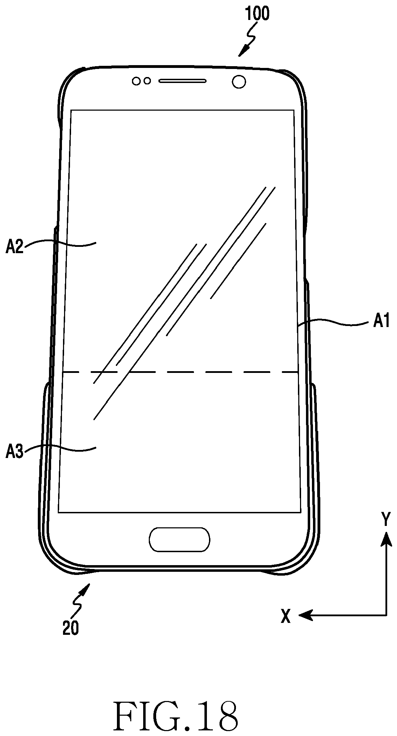

FIG. 17 is a flowchart for entering the keyboard mode in the electronic device according to various embodiments of the present disclosure. FIG. 18 is a view showing the front surface of the electronic device according to various embodiments of the present disclosure.

Referring to FIGs. 17 and 18, in operation 1701, the electronic device 100 may divide a first display area A1 into a second display area A2 and a keyboard area A3. For example, the first display area A1 may be a full area of the touch screen (display) before the auxiliary device is mounted.

In operation 1703, the electronic device 100 may reduce the first display area A1 and display it on the second display area A2. For example, the electronic device 100 may display the second display area A2 by reducing the first display area A1 by adjusting a ratio of the first display area A1 on the Y-axis (vertical axis) while maintaining a ratio on the X-axis (horizontal axis).

In operation 1705, the electronic device 100 may display a keyboard on the keyboard area A3. For example, the keyboard may be any one of a QWERTY keyboard, a Chunjiin keyboard, a Naratgeul keyboard, a Vega keyboard, a MoAKey keyboard, a swype keyboard. In addition, when the auxiliary input device is mounted and the electronic device enters the keyboard mode, a keyboard may not be displayed on the keyboard area.

Although FIG. 17 depicts that, when the electronic device 100 enters the keyboard mode, the electronic device 100 may reduce the first display area A1 and display it on the second display area A2, the present disclosure is not limited thereto and other embodiments are possible. For example, the electronic device 100 may display a character display window on the second display area to display a character inputted through the keyboard. In another example, the electronic device may display an area of the first display area other than the keyboard area on the second display area as it is.

The term "module," as used herein may represent, for example, a unit including a combination of one or two or more of hardware, software, or firmware. The "module" may be, for example, used interchangeably with the terms "unit", "logic", "logical block", "component", or "circuit" etc. The "module" may be the minimum unit of an integrally constructed component or a part thereof. The "module" may be also the minimum unit performing one or more functions or a part thereof. The "module" may be implemented mechanically or electronically. For example, the "module" may include at least one of an application-specific integrated circuit (ASIC) chip, Field - Programmable Gate Arrays (FPGAs) and a programmable-logic device performing some operations known to the art or to be developed in the future.

At least a part of an apparatus (e.g., modules or functions thereof) or method (e.g., operations) according to the present invention may be, for example, implemented as instructions stored in a computer-readable storage medium in a form of a programming module. In case that the instruction is executed by a processor (e.g., processor 120), and the processor may perform functions corresponding to the instructions. The computer-readable storage media may be the memory 130, for instance.

The computer-readable recording medium may include a hard disk, a floppy disk, and a magnetic medium (e.g., a magnetic tape), an optical medium (e.g., a Compact Disc - Read Only Memory (CD-ROM) and a Digital Versatile Disc (DVD)), a Magneto-Optical Medium (e.g., a floptical disk), and a hardware device (e.g., a Read Only Memory (ROM), a Random Access Memory (RAM), a flash memory, etc.). Also, the program instruction may include not only a mechanical language code such as a code made by a compiler but also a high-level language code executable by a computer using an interpreter, etc. The aforementioned hardware device may be constructed to operate as one or more software modules in order to perform operations of the present invention, and vice versa.

The module or programming module according to the present invention may include at least one or more of the aforementioned constituent elements, or omit some of the aforementioned constituent elements, or further include additional other constituent elements. Operations carried out by the module, the programming module or the other constituent elements according to the present invention may be executed in a sequential, parallel, repeated or heuristic method. Also, some operations may be executed in different order or may be omitted, or other operations may be added.

## Claims

1. A system comprising:
an electronic device upper surface;
a rear surface opposite to the upper surface;
a touch screen (190) arranged on the electronic device upper surface;
an exterior cover arranged on the rear surface; and
an auxiliary device (30) which is attached to or detached from the exterior cover by means of a coupling structure,
wherein:
the auxiliary device is coupled in close contact with at least a part of the touch screen (190), and is configured to operate the touch screen by a pressing operation,
the auxiliary device causes a change in a capacitance value that is recognized by the electronic device by the pressing operation,
the auxiliary device comprises a substrate (32) arranged in close contact with the touch screen (190), and a keypad arranged on the substrate and provided with a plurality of key tops (31) for inputting data by the pressing operation,
the substrate (32) comprises a first surface, and a second surface opposite to the first surface,
the first surface comprises a non-conductive layer area (323), and first (321) and second (322) conductive layer areas which are divided by the non-conductive layer area (323) and are isolated from each other,
the second surface has a plurality of conductive pads (325) formed thereon, and each of the conductive pads (325) is electrically connected to the first conductive layer (321) area through at least one connector (324) and is in close contact with the touch screen,
each of the connectors (324) is formed by forming a via hole in the substrate and plating or filling the via hole, and
each of the conductive pads is formed on a position corresponding to an intersection of a receiver and a transmitter which form the touch screen, such that there is one such intersection per one key top.

2. The system of claim 1, wherein the touch screen (190) is configured to display a first display area (A1), and
wherein the electronic device further comprises a controller (1510) configured to determine whether an auxiliary device (30) is mounted, to determine a type of the auxiliary device when the auxiliary device (30) is mounted, to enter an input mode corresponding to the type of the auxiliary device, and to receive a user input using the auxiliary device.

3. The system of claim 2, wherein the controller (1510) is configured to, when the type of the auxiliary device is a keyboard, display a keyboard area (A3) displaying the keyboard on the display, and a second area (A2) displaying the reduced first display area (A1).

4. The system of claim 3, wherein the second area is formed by adjusting a ratio of the first display area on a Y-axis.

5. The system of claim 2, wherein the electronic device comprises an NFC module configured to receive information on the type of the auxiliary device from an NFC tag of the auxiliary device (30).

## Patentansprüche

1. System, umfassend:
eine obere Fläche einer elektronischen Vorrichtung;
eine hintere Fläche gegenüber der oberen Fläche;
einen Berührungsbildschirm (190), der auf der oberen Fläche der elektronischen Vorrichtung angeordnet ist;
eine äußere Abdeckung, die auf der hinteren Fläche angeordnet ist;
und eine Hilfsvorrichtung (30) die mithilfe einer Kopplungsstruktur an der äußeren Abdeckung angebracht oder von der äußeren Abdeckung gelöst ist, wobei:
die Hilfsvorrichtung in engem Kontakt zu mindestens einem Teil des Berührungsbildschirms (190) gekoppelt ist, und konfiguriert ist, um den Berührungsbildschirm durch einen Drückvorgang zu betreiben, die Hilfsvorrichtung eine Änderung in einem Kapazitanzwert bewirkt, die von der elektronischen Vorrichtung durch den Drückvorgang erkannt wird, die Hilfsvorrichtung ein Substrat (32), das in engem Kontakt zum Berührungsbildschirm (190) angeordnet ist, und ein Tastenfeld, das auf dem Substrat angeordnet und mit einer Vielzahl von Tastenflächen (31) zum Eingeben von Daten durch den Drückvorgang versehen ist, umfasst, das Substrat (32) eine erste Fläche und eine zweite, der ersten Fläche gegenüberliegende Fläche umfasst, die erste Fläche einen nicht-leitenden Lagenbereich (323) und erste (321) und zweite (322) leitende Lagenbereiche umfasst, die durch den nicht-leitenden Lagenbereich (323) getrennt und voneinander isoliert sind, die zweite Fläche eine Vielzahl darauf geformter leitender Felder (325) aufweist und jedes der leitenden Felder (325) durch mindestens einen Verbinder (324) mit dem ersten leitenden Lagenbereich (321) elektrisch verbunden und in engem Kontakt zum Berührungsbildschirm ist, jeder der Verbinder (324) durch Formen eines Durchgangslochs im Substrat und durch Plattieren oder Füllen des Durchgangslochs geformt ist und jedes der leitenden Felder auf einer Position geformt ist, die einer Schnittstelle eines Empfängers und eines Senders, die den Berühgungsbildschirm formen, entspricht, so dass es eine derartige Schnitstelle je Tastenfläche gibt.

2. System nach Anspruch 1, wobei der Berührungsbildschirm (190) konfiguriert ist, um einen ersten Anzeigebereich (A1) anzuzeigen, und wobei die elektronische Vorrichtung ferner eine Steuerung (1510) umfasst, die konfiguriert ist, um zu bestimmen, ob eine Hilfsvorrichtung (30) montiert ist, um einen Typ der Hilfsvorrichtung zu bestimmen, wenn die Hilfsvorrichtung (30) montiert ist, um einen Eingabemodus einzugeben, der dem Typ der Hilfsvorrichtung entspricht, und um mithilfe der Hilfsvorrichtung eine Nutzereingabe zu empfangen.

3. System nach Anspruch 2, wobei die Steuerung (1510) konfiguriert ist, um, wenn der Typ der Hilfsvorrichtung eine Tastatur ist, einen Tastaturbereich (A3), der die Tastatur auf der Anzeige anzeigt, und einen zweiten Bereich (A2) anzuzeigen, der den reduzierten ersten Anzeigebereich (A1) anzeigt.

4. System nach Anspruch 3, wobei der zweite Bereich durch Einstellen eines Verhältnisses des ersten Anzeigebereichs auf einer Y-Achse geformt wird.

5. System nach Anspruch 2, wobei die elektronische Vorrichtung ein NFC-Modul umfasst, das konfiguriert ist, um Informationen über den Typ der Hilfsvorrichtung von einem NFC-Tag der Hilfsvorrichtung (30) zu empfangen.

## Revendications

1. Système comprenant :
une surface supérieure d'un dispositif électronique ;
une surface postérieure faisant face à la surface supérieure ;
un écran tactile (190) agencé sur la surface supérieure du dispositif électronique ;
une enveloppe extérieure agencée sur la surface postérieure ; et
un dispositif auxiliaire (30) fixé sur l'enveloppe extérieure, ou détaché de celle-ci, par le biais d'une structure d'accouplement,
le dispositif auxiliaire étant couplé étroitement à au moins une partie de l'écran tactile (190), et étant configuré pour actionner l'écran tactile par une action de pression, le dispositif auxiliaire entraînant une variation de capacité qui est reconnue par le dispositif électronique par l'action de pression, le dispositif auxiliaire comprenant un substrat (32) agencé en étroit contact avec l'écran tactile (190), et un mini-clavier agencé sur le substrat et muni d'une pluralité de dessus de touche (31) pour l'entrée de données par l'action de pression, le substrat (32) comprenant une première surface, et une deuxième surface située face à la première surface, la première surface comprenant une zone à couche non conductrice (323), et des première (321) et deuxième (322) zones à couche conductrice divisées par la couche non conductrice (323) et isolées l'une de l'autre, la deuxième possédant une pluralité de pastilles conductrices (325) formées dessus, et chacune des pastilles conductrices (325) étant connectée électriquement à la première couche conductrice (321) par le biais d'au moins un connecteur (324) et étant en contact étroit avec l'écran tactile, chacun des connecteurs (324) étant formé par la formation d'un trou d'interconnexion dans le substrat et le placage ou le remplissage du trou d'interconnexion, et chacune des pastilles conductrices étant formée sur une position correspondant à une intersection d'un récepteur et d'un transmetteur constituant l'écran tactile, de façon à constituer une de ces intersections pour chaque dessus de touche.

2. Système selon la revendication 1, l'écran tactile (190) étant configuré pour afficher une première zone d'affichage (A1), et le dispositif électronique comprenant en outre un contrôleur (1510) configuré pour déterminer si un dispositif auxiliaire (30) est monté, pour déterminer un type du dispositif auxiliaire lorsque le dispositif auxiliaire (30) est monté, pour entrer un mode d'entrée correspondant au type de dispositif auxiliaire, et pour recevoir une entrée utilisateur à l'aide du dispositif auxiliaire.

3. Système selon la revendication 2, le contrôleur (1510) étant configuré, lorsque le type de dispositif auxiliaire est un clavier, pour afficher une zone du clavier (A3) affichant le clavier sur le dispositif d'affichage, et une deuxième zone (A2) affichant la première zone d'affichage réduite (A1).

4. Système selon la revendication 3, la deuxième zone étant formée en ajustant un ratio de la première zone d'affichage sur un axe Y.

5. Système selon la revendication 2, le dispositif électronique comprenant un module NFC configuré pour recevoir des informations sur le type de dispositif auxiliaire d'une balise NFC du dispositif auxiliaire (30).
